# EUROPEAN PATENT SPECIFICATION

(11) **EP 2 413 242 B1**
(45) Date of publication and mention of the grant of the patent: **29.03.2017**
(21) Application number: 11005876.5
(22) Date of filing: 18.07.2011
(51) Int. Cl.: G06F 11/36

(54) **System and method for test strategy optimization**
System und Verfahren zur Teststrategieoptimierung
Système et procédé d'optimisation de stratégie de test

(30) Priority: 30.07.2010 US 847211
(43) Date of publication of application: 01.02.2012
(73) Proprietor: SAP SE, 69190 Walldorf (DE)
(72) Inventor: Kamenz, Torsten, 69190 Walldorf (DE); Kemmler, Andreas, 69190 Walldorf (DE)
(74) Representative: Müller-Boré & Partner Patentanwälte PartG mbB

(56) References cited:
- US-B1- 7 506 312
- US-B2- 7 490 319
- MICHAEL R LYU ED - ANONYMOUS: "Software Reliability Engineering: A Roadmap", FUTURE OF SOFTWARE ENGINEERING, 2007. FOSE '07, IEEE, PI, 1 May 2007 (2007-05-01), pages 153-170, XP031095727, ISBN: 978-0-7695-2829-8
- C.-Y. HUANG ET AL: "Optimal Release Time for Software Systems Considering Cost, Testing-Effort, and Test Efficiency", IEEE TRANSACTIONS ON RELIABILITY, vol. 54, no. 4, 1 December 2005 (2005-12-01), pages 583-591, XP55010181, ISSN: 0018-9529, DOI: 10.1109/TR.2005.859230

## Description

### BACKGROUND

One of the most prominent Total Cost of Ownership (TOC) factors in the lifecycle of a software application may include testing of the changes implemented on installed and running software applications (e.g., regression tests). Typically, whenever a change is applied to a software application, the various processes supported by the software application should be checked for consistency (e.g., checked for unwanted side-effects). Changes to the software application may originate from the vendor, (e.g., updates or enhancements) or from customer-specific changes. Examples of changes may include patches, support packages, new versions of the installed software, modifications of the software, or the addition/modification/deletion of separate customer software running in the same system (e.g., software of another vendor).

A software application may consist of a collection of data, referred to as software artifacts that are executed or evaluated at runtime. Risk of regression may arise whenever a software application is modified. In order to ensure the correctness of running processes, it may be necessary to perform and repeat tests for the processes of the software application. Each repeated test (e.g., after each modification) may need to be performed on the entire system, which may be an extremely time and resource consuming operation. Alternatively, risk-based subsets may be defined, and the tests may be directed to only some of the subsets (e.g., "core functions"). However, these relate only to the processes known to be critical, with no regard for what artifacts were or were not affected by the modification. For example, many artifacts may be negatively affected, but belong to processes deemed less critical, and therefore not tested. Further, many artifacts may be wholly unaffected by a change, yet belong to a "core function," and thus may be needlessly tested.

There already exist analysis tools capable of determining what artifacts are affected by which processes. This tool may compile a list of associations between the various artifacts and various processes. Such that, if artifact A is modified (e.g., by a system update patch), a list of processes may be referenced to determine which processes use artifact A, (e.g., process 1 and process 2). Next, a list of all artifacts may be compiled for process 1 and process 2. This list may comprise all the artifacts that are potentially affected by the modification of artifact A. This may allow the exclusion of irrelevant artifacts from a test cycle. An example tool includes the Business Process Change Analyzer™ (BPCA) included in the SAP^{®} Solution Manager™. This may provide significant time and resource savings in cases of small changes, affecting only a small number of software artifacts, or when the changed software artifacts are all in the same area, affecting only a distinct subset of the processes. However, many systems are heavily interrelated, such that each artifact may be used by several processes. Further, for all but the smallest of updates, enough artifacts may be changed that the list of *affected* artifacts, based on all the artifacts used by processes that use a *changed* artifact, may essentially be a list of all the artifacts of the system. In other words, because of system interdependence, update size, or a sufficient combination of the two, many changes may require just as much testing as required without the use of the analysis tool (e.g., a standard "total system" test).

The inventors have introduced a solution to reduce the necessary regression test effort and simultaneously increase the quality of the regression tests.

US 7 490 319 B2 relates to a testing tool for testing of complex software systems having a plurality of interrelated system components and a suite of test scenarios for testing the performance of the plurality of interrelated system components. The testing tool includes an Automated Multidimensional Traceability Matrix system for determining linkages between interrelated system components, a means for identifying a change in one or more of the interrelated system components, a means for applying the Automated Multidimensional Traceability Matrix, a means for executing all of or a subset of the test scenarios associated with the interrelated system components that may be affected by the change and a means for evaluating the results of the executed test scenarios.

### BRIEF DESCRIPTION OF THE DRAWINGS

Figure 1 is an illustration of data structures related to example embodiments of the present invention.
Figure 2 is an example procedure, according to one example embodiment of the present invention.
Figure 3 is another example procedure, according to one example of the present invention.
Figure 4 is an example system, according to one example embodiment of the present invention.

### DETAILED DESCRIPTION

Example embodiments of the present invention provide a new test strategy that is based on an analysis of the running processes and their importance, as well as the applied software changes and their criticality. An example method of the present invention may include a tool (e.g., a Test Strategy Optimizer), which takes both factors into account and calculates/simulates an optimized test scope, e.g. organizes which processes or process steps should be tested in which order. Unless otherwise indicated, where example embodiments are described in terms of testing processes, the example methods and systems may equally apply to testing of the process step level, either in a single process or among a set of processes.

Each process, e.g., a set of organized steps and/or functions that define some business operation, may have a specification or definition object to describe the associated functionality. Each process, in order to facilitate the various defined steps of the process, may call upon one or more software artifacts to perform the functional work of the particular steps of the respective process. Each process may also have a criticality rating to specify the importance of that process to the organization running the updated software. This rating may be defined by the user, automatically determined, or a combination of both. For example, a user may specify a level of criticality (e.g., essential, important, frequently used, lower importance, rarely used, etc.). Further, the system may log usage rates for the various processes, and base a criticality level on this and/or other automatically recorded metrics. These may then establish or modify the criticality level, or may be shown to the user to help the user accurately specify the criticality level.

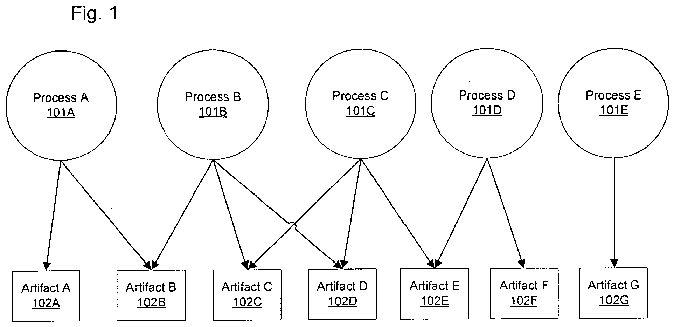

In addition to identifying the criticality level of each process, a list of processes and/or artifacts affected by a change may be compiled. With reference to Figure 1, an example update may alter the functionality of artifact A and artifact D. The update itself may provide a list of what artifacts are modified, or one may be automatically constructed by analyzing the update. Once there is a list of artifacts that are modified (e.g., A and D), a list of processes affected may be constructed. Here, artifact A is only used by process A, so process A is added to the list and no other with regard to artifact A. Artifact D is used by process B and process C, which are therefore both added to the list of potentially affected processes. This process list may then define the total set of that which needs to be tested, within the confines of determined and specified parameters. In other example embodiments, a list of affected artifacts may be determined. For example, here, artifacts A to E are all within the test scope, since the potentially affected processes A to C use each of them. It may be noted that artifact B, C, and E are known to work, since these artifacts were not modified in any way. However, they must be tested in the context of the processes that included a modified artifact, to ensure they still function as expected, within the context of the overall processes. In an advantageous implementation, the example embodiments may limit testing to the relevant processes, e.g., those processes that call upon a changed artifact.

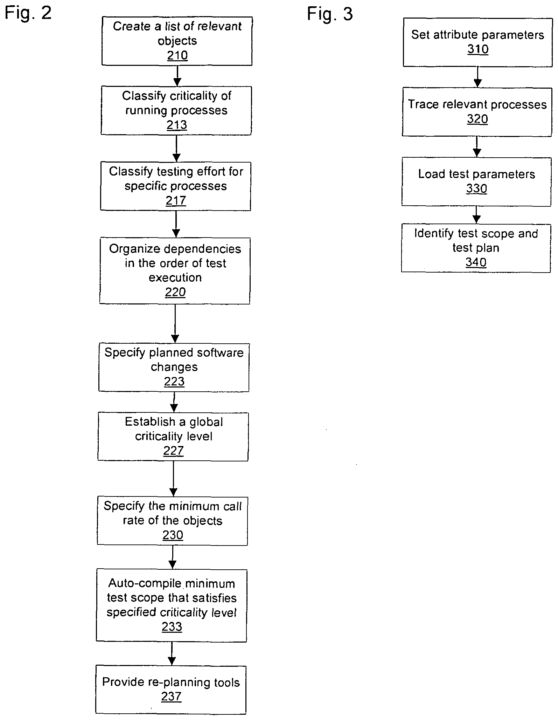

Once all of the component parts are complied, example embodiments may calculate the regression test scope that optimizes the ensured process quality and the necessary test effort. This calculation may be based on the above mentioned mapping of the process-related software artifacts to the changed software artifacts. The resulting test scope (e.g., list of processes or process steps to be tested) ensures that each software artifact is included in the tests. The required test quality may be configured by a user, which may determine the resulting test scope (e.g., a lower required quality assurance may require a lower minimum test scope). Test scope, e.g., as a result of quality assurance specifications, may be defined in a number of ways. For example, the inclusion of a software artifact in at least one tested process may be sufficient or a user may require several different calls of the specific software artifact. One tool of an example embodiment may provide to a user all the relevant data of the proposed test scope and allow for the manipulation of the test scope and the simulation of the resulting test coverage, via the adjusting of various parameters, which are discussed below, with regard to Figure 2.

Test scope parameters may include setting whether all processes must be tested, all processes in a process-group with an affected artifact, all processes with an affected artifact, or all processes above a minimum criticality level. This may be determined at the process level or process step level. For example, a process, e.g., a business process, may include a plurality of steps within the process. The user may specify test criteria that defines which processes should be tested, or may specify test criteria that defines which steps of the various processes should be tested. Further, example embodiments may automatically determine various process dependencies. Such that, if one process cannot be fully validated without first validating another process, then this dependency may be used to organize the order of regression tests, for maximum efficiency. Process dependencies may also be determined/specified by the user.

Figure 2 illustrates one example embodiment of the parameter specifications that may be used for the optimizing engine. First, at 210, a list may be constructed of the objects (e.g., the artifacts) relevant for the running processes and/or process steps. Next, at 213, a criticality classification may be assigned to each of the running processes and/or process steps. This may be based on user input, statistical analysis, vendor designation, or any number of other sources. Next, at 217, the effort required to test each specific process is classified. Effort may primarily be a user specified attribute, based on historical effort of prior integrations, prior test effort, and the effort required for the types of changes/testing needed. Next, at 220, process dependencies may be identified and organized to maximize efficiency of test execution. Next, at 223, the planned software changes may be specified and/or determined (e.g., changes included in an update package). Next, at 227, a global criticality level may be specified. In this step, a user may specify the level of ensured correctness for each criticality level used in step 213. For example, highly critical processes may need to be tested until the determined probability of correctness is at least 99%, whereas very low criticalities may be lightly tested, ensuring against only major incompatibilities. At step 230, a minimum call rate may be established. This is the minimum number of times each relevant object should be called during the test process.

At 233, the example procedure may now automatically determine the most effective test scope. This may include determining which processes and/or process steps need to be tested in order to ensure the global criticality values are achieved. At this point a test scope may be defined for the proposed testing, and various parameters related to the scope, ensured correctness rates, test effort, test time, etc. may be provided to a user for review at 237. Then the user may loop back and re-plan, modify, or otherwise adjust the parameters of the test scope. For example, a user may have set an ensured minimum correctness rate of 99% for a certain highly critical group of processes, but after all of the calculations are performed by the example embodiment, it may result in a test effort/time that far exceeds any useful timeframe (e.g., several months). The user may then go back and make adjustments to conform to other constraints (e.g., a set timeframe).

While example procedures and example systems may construct the most efficient test scope for achieving stated test goals, there may be conflicting constraints. For example, an organization may need certain mission critical processes to be fully tested and guaranteed correct, at least as much as possible via the testing. However, the organization may also need the system tested and integrated within a certain period of time (e.g., a month or under a thousand engineer-hours). The example procedures and systems may calculate the most efficient scope to achieve the stated levels of testing, but determine that it is impossible to accomplish in the stated timeframe. The system may inform the user of how much time the specified levels will require, and automatically suggest one or more alternative criteria to meet the conflicting criteria. For example, the example system may calculate and inform the user that lowering the minimum ensured correctness rate from 99% to 92% will lower the required test time from six weeks to the under one-month stated criteria. The user may then decide what changes should occur and/or if more time should be requested for the project.

In order to decrease the necessary regression test effort when implementing a change, the running processes and the planned change may be compared on the level of technical objects. If an artifact is used by a process or process step and the same object is affected by the change (e.g., changed itself) the process or process step may be marked as "to be tested." Example embodiments may then evaluate which of the processes or process steps should be tested in order to achieve the necessary object coverage (e.g., in many cases this may be 100%) with the lowest possible test effort. So, the parameters which may be used for this determination are the processes/process steps and their test effort, criticality and the assigned technical objects. On the other side the changed objects are taken into account. The determined test scope is displayed to the user together with all relevant info as specified above. The user can then manually change the test scope according to his/her needs. The effect of this manual change to the test coverage and effort is simultaneously calculated and displayed. After finishing the definition of the test scope it can be stored and transferred to a test management tool for further processing.

Figure 3 may illustrate an example of the present invention. Returning to Figure 1 as an illustration, the example of Figure 3 may receive user input designating the criticality of each process A to E, and the effort required to test each of these processes (e.g., at 310). These values may come from user input, vendor input, statistical analysis, or any other useful source or combination of sources. For example, users may know which processes are critical to their core business activities, and which could experience downtime without negatively impacting the core business operation. Further logs of the frequency of use may be kept, providing more information about criticality of various processes. With regard to test effort, the supplying vendor may specify how complex and time consuming a particular process or set of processes may be. The user (e.g., a company's Information Technology department) may have expert information about these characteristics, and past test experience may guide test effort designations, either anecdotally or statistically. Additionally, pre-tests may be run on the processes to estimate the complexity of a full regression test. By calculating the dependencies, code size, loop and recursion sizes, and types of functions, along with or in addition to running a specially designed pre-test dataset, an estimate may be built for how long a regression test may take, and an approximation of how many engineering-hours may be required to complete such a test. This step (e.g., 310) may form the core of process-specific attributes.

Next, at 320, an example may identify changed artifacts, to identify changed processes, e.g., as was discussed above. With reference to Figure 1, the alteration of artifacts A and D may require testing of processes A, B, and C, with artifacts A to E. Process D and artifact F may also be tested in some examples, but may be skipped in other examples. In one example of the latter case, changed artifact A traced up to process A, which caused process A to be included. Further, artifact D traced up to both process B and process C, which caused those processes to be included. Finally, all artifacts of the included processes may be tested, which includes artifacts A to E. In this example, that may be the total scope of the test. However, in an example of the other situation, it may be appreciated that artifact E is connected to process C, which is connected to changed artifact D. Therefore, this alternative example may increase the scope by tracing up to process D, and then down to artifact F. However, in some system architectures, this situation may not be required, which may then be avoided to increase the efficiency of testing. In many example systems, artifacts B, C, and E are only tested as a function of forming part of a process that has a modified component (e.g., artifacts A and D). Process D does not have a modified component, and thus, even if artifact E caused issues in process C, after the inclusion of a modified artifact D, there should be no such issues in process D, which remains the same via unchanged artifacts E and F.

At 330, the example process may load or receive the test parameters, e.g., as was discussed in the context of Figure 2. At 340, the example process may use the data collected from the prior steps to identify the most efficient test procedure that satisfies the test parameters, or in the event satisfaction is impossible, may suggest alterations in the test parameters. An example to illustrate this may include, a user specification that each changed artifact must be called by at least ten processes that use it and all critical artifacts must be called at by at least twelve processes that use it, and artifact B may be designated a critical artifact. Thus, the example procedure may deduce that changed artifact A must be called at least ten times (e.g., by ten processes that use artifact A). In this simplified example, only one process calls artifact A (e.g., process A), but in a typical example implementation, several processes may call artifact A, and the specified number (e.g., ten) may specify how many of those processes must call artifact A. In this simplified example though, since only one process calls artifact A, a requirement of ten may also mean *process* A must be called at least ten times.

Further, changed artifact D must be called at least ten times, which means the number of times process B is called and the number of times process C is called must sum to at least ten. The example method may select which of process B and process C will be called, and how many times, based on the test effort criteria. For example, after process A is called the required ten times (e.g., since changed artifact A is only called by process A and must be called at least ten times), the criteria will still require changed artifact D to be called at least ten times, and critical artifact B to be called at least two more times (e.g., the required twelve calls for critical artifacts minus the ten calls inherent to the requirement that process A be called ten times). Thus, if the complexity of process B is designated some very high factor (e.g., 20 complexity units), while the complexity of process C and process A is a very low factor (e.g., 1 complexity unit), the algorithm may satisfy the criteria by specifying a call to process C ten times, process A twelve times, and process B zero times, for a complexity sum of 22. However, if the complexity of each is some similar number (e.g., 1), then the example algorithm may satisfy the criteria by specifying a call to process A ten times, process B two times, and either process B or process C eight times, for a complexity sum of 20. In this later case, if either process B or process C was slightly less complex, the algorithm may specify the less complex process for the eight additional calls.

As mentioned above, the example embodiment illustrated in Figure 2, with reference to Figure 1 are simplified examples, whereas a typical implementation may include many more processes, and a specification of minimum calls (e.g., at 230) may be satisfied by that number of processes. For example, a minimum of ten may mean that at least ten unique processes must be called to test the relevant artifact. Further, the complexity analysis may be to choose the most efficient processes to satisfy these minimum call requirements.

Of course other criteria may be accounted for, such as ensuring each process is called a minimum number of times. Further, some calls to a process may not call upon every artifact associated with that call. For example, process C may call artifact C and then call either artifact D or artifact E, or call both artifacts D and E. Thus, the configuration of each process may add another dimension for planning the optimal test strategy.

When no optimal test strategy can be calculated, e.g., because the criteria are set to strictly and are in conflict. The example procedure may determine one or more adjustments that could cause the criteria to be satisfied with minimum impact. With regard to the example above, artifact A may have a very low criticality level, thus, if the minimum call requirement for changed artifacts with a low criticality level is lowered to five, then process A may only need to be called five times, while still calling artifact B twelve times and artifact D ten times.

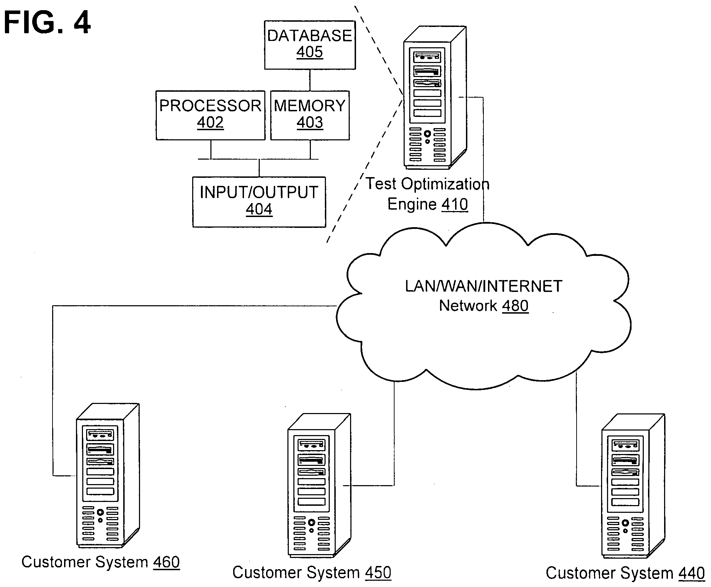

Figure 4 illustrates one example system, according to an example embodiment of the present invention. The example may include one or more server computer systems, e.g., test optimization engine 410. This may be one server, a set of local servers, or a set of geographically diverse servers. Each server may include an electronic computer processor 402, one or more sets of memory 403, including database repositories 405, and various input and output devices 404. These too may be local or distributed to several computers and/or locations. Any suitable technology may be used to implement embodiments of the present invention, such as general purpose computers. These system servers may be connected to one of more customer system 440 to 460 via a network 480, e.g., the Internet. One or more system servers may operate hardware and/or software modules to facilitate the inventive processes and procedures of the present application, and constitute one or more example embodiments of the present invention. Further, one or more servers may include a computer readable medium, e.g., memory 403, with instructions to cause a processor, e.g., processor 402, to execute a set of steps according to one or more example embodiments of the present invention.

It should be understood that there exist implementations of other variations and modifications of the invention and its various aspects, as may be readily apparent to those of ordinary skill in the art, and that the invention is not limited by specific embodiments described herein. Features and embodiments described above may be combined. It is therefore contemplated to cover any and all modifications, variations, combinations or equivalents that fall within the scope of the basic underlying principals disclosed and claimed herein.

## Claims

1. A computer-implemented method of increasing software testing efficiency during regression testing, comprising:
compiling (210), with an electronic processor, a list of relevant processes,
wherein the list of relevant processes is defined by which processes (101A-101 E) call an artifact (102A-102G) that has been changed;
assigning (213), with the electronic processor, a criticality attribute to each relevant process;
classifying (217), with the electronic processor, a test effort required for each relevant process;
determining (220) dependencies between the relevant processes;
specifying (227) a global criticality level, the global criticality level specifying levels of ensured correctness for each relevant process according to the assigned criticality attribute, wherein the higher the level of ensured correctness is, the more the corresponding relevant process needs to be tested;
determining (230), by a user specification, a minimum call rate for each changed artifact,
wherein the minimum call rate is a minimum number of times each changed artifact is called by the processes that use it during a test process;
compiling (233), with the electronic processor, a minimum test scope that satisfies the global criticality level,
wherein said minimum test scope is based:
- at least in part on the dependencies; and
- at least in part on the minimum call rate for each changed artifact;
wherein compiling the minimum test scope includes determining which processes or process steps need to be tested in order to ensure that the global criticality level is achieved;
providing for review (237), via a user interface executed on the electronic processor, parameters related to the minimum test scope, the parameters comprising the test effort or the test time associated with the compiled minimum test scope;
providing (237), via the user interface executed on the electronic processor, a set of re-planning tools configured to receive input modifying parameters, the input modifying parameters comprising the level of ensured correctness for the relevant processes, and recompiling the minimum test scope; and
transferring the compiled minimum test scope to a test management tool.

2. Computer program product comprising computer readable instructions, which when loaded and run in a computer system and/or computer network system, causes the computer system and/or the computer network system to perform operations according to the method of claim 1.

3. A computer system for increasing software testing efficiency during regression testing, comprising:
an electronic processor configured to execute a software package that include a plurality of processes (101A-101E) and a plurality of artifacts (102A-102G), and responsive to a software update, the electronic processor configure to:
compile (210) a list of relevant processes,
wherein the list of relevant processes is defined by which processes (101A-101 E) call an artifact (102A-102G) that has been changed;
assign (213) a criticality attribute to each relevant process;
classify (217) a test effort required for each relevant process;
determine (220) dependencies between the relevant processes;
specify (227) a global criticality level, the global criticality level specifying levels of ensured correctness for relevant process according to the assigned criticality attribute, wherein the higher the level of ensured correctness is, the more the corresponding relevant process needs to be tested;
determine (230), by a user specification, a minimum call rate for each changed artifact,
wherein the minimum call rate is a minimum number of times each changed artifact is called by the processes that use it during a test process;
compile (233) a minimum test scope that satisfies the global criticality level,
wherein said minimum test scope is based:
- at least in part on the dependencies; and
- at least in part on the minimum call rate for each changed artifact;
wherein compiling the minimum test scope includes determining which processes or process steps need to be tested in order to ensure that the global criticality level is achieved;
provide (237) for review parameters related to the minimum test scope, the parameters comprising the test effort or the test time associated with the compiled minimum test scope;
provide (237) a set of re-planning tools configured to receive input modifying parameters, the input modifying parameters comprising the level of ensured correctness for the relevant processes, and recompiling the minimum test scope; and
transfer the compiled minimum test scope to a test management tool.

## Patentansprüche

1. Computerimplementiertes Verfahren zum Erhöhen einer Softwaretesteffizienz während Regressionstests, umfassend:
Erstellen (210), mit einem elektronischen Prozessor, einer Liste von relevanten Prozessen,
wobei die Liste von relevanten Prozessen dadurch definiert ist, welche Prozesse (101A-101E) ein Artefakt (102A-102G) aufrufen, das verändert wurde;
Zuweisen (213), mit dem elektronischen Prozessor, eines Kritikalitätsattributs zu jedem relevanten Prozess;
Klassifizieren (217), mit dem elektronischen Prozessor, eines Testaufwands, der für jeden relevanten Prozess erforderlich ist;
Bestimmen (220) von Abhängigkeiten zwischen den relevanten Prozessen;
Spezifizieren (227) eines globalen Kritikalitätsgrads, wobei der globale Kritikalitätsgrad Grade sichergestellter Richtigkeit für jeden relevanten Prozess gemäß dem zugewiesenen Kritikalitätsattribut spezifiziert, wobei je höher das Niveau sichergestellter Richtigkeit ist, desto mehr muss der entsprechende relevante Prozess getestet werden;
Bestimmen (230), durch eine Benutzerspezifikation, einer Minimumaufrufrate für jedes veränderte Artefakt,
wobei die Minimumaufrufrate eine Minimumanzahl an Malen ist, die jedes veränderte Artefakt von den Prozessen aufgerufen wird, die es während eines Testprozesses verwenden;
Erstellen (233), mit dem elektronischen Prozessor, eines Minimumtestumfangs, den der globale Kritikalitätsgrad erfüllt,
wobei der Minimumtestumfang basiert auf:
- zumindest teilweise den Abhängigkeiten; und
- zumindest teilweise der Minimumaufrufrate für jedes veränderte Artefakt;
wobei das Erstellen des Minimumtestumfangs das Bestimmen beinhaltet, welche Prozesse oder Prozessschritte getestet werden müssen, um sicherzustellen, dass der globale Kritikalitätsgrad erreicht wird;
Bereitstellen zur Überprüfung (237), über eine Benutzerschnittstelle, die auf dem elektronischen Prozessor ausgeführt wird, von Parametern, die den Minimumtestumfang betreffen, wobei die Parameter den Testaufwand oder die Testzeit umfassen, die mit dem erstellen Minimumtestumfang assoziiert bzw. verknüpft ist;
Bereitstellen (237), über die Benutzerschnittstelle, die auf dem elektronischen Prozessor ausgeführt wird, eines Satzes von Neuplanung-Tools, konfiguriert zum Empfangen von Eingabemodifizierungsparametern, wobei die Eingabemodifizierungsparameter das Niveau sichergestellter Richtigkeit für die relevanten Prozesse umfassen, und Neuerstellen des Minimumtestumfangs; und
Übertragen des erstellen Minimumtestumfangs an ein Testmanagement-Tool.

2. Computerprogrammprodukt, umfassend computerlesbare Befehle, die, wenn in einem Computersystem und/oder Computernetzwerksystem geladen und ausgeführt, das Computersystem und/oder Computernetzwerksystem veranlassen, Operationen gemäß dem Verfahren nach Anspruch 1 durchzuführen.

3. Computersystem zum Erhöhen einer Softwaretesteffizienz während Regressionstests, umfassend:
einen elektronischen Prozessor, konfiguriert zum Ausführen eines Softwarepakets, das eine Mehrzahl von Prozessen (101A-101E) und eine Mehrzahl von Artefakten (102A-102G) enthält, und auf eine Softwareaktualisierung anspricht, wobei der elektronische Prozessor konfiguriert ist zum:
Erstellen (210) einer Liste von relevanten Prozessen,
wobei die Liste von relevanten Prozessen dadurch definiert ist, welche Prozesse (101A-101E) ein Artefakt (102A-102G) aufrufen, das verändert wurde;
Zuweisen (213) eines Kritikalitätsattributs zu jedem relevanten Prozess;
Klassifizieren (217) eines Testaufwands, der für jeden relevanten Prozess erforderlich ist;
Bestimmen (220) von Abhängigkeiten zwischen den relevanten Prozessen;
Spezifizieren (227) eines globalen Kritikalitätsgrads, wobei der globale Kritikalitätsgrad Grade sichergestellter Richtigkeit für jeden relevanten Prozess gemäß dem zugewiesenen Kritikalitätsattribut spezifiziert, wobei je höher das Niveau sichergestellter Richtigkeit ist, desto mehr muss der entsprechende relevante Prozess getestet werden;
Bestimmen (230), durch eine Benutzerspezifikation, einer Minimumaufrufrate für jedes veränderte Artefakt,
wobei die Minimumaufrufrate eine Minimumanzahl an Malen ist, die jedes veränderte Artefakt von den Prozessen aufgerufen wird, die es während eines Testprozesses verwenden;
Erstellen (233), mit dem elektronischen Prozessor, eines Minimumtestumfangs, den der globale Kritikalitätsgrad erfüllt,
wobei der Minimumtestumfang basiert auf:
- zumindest teilweise den Abhängigkeiten; und
- zumindest teilweise der Minimumaufrufrate für jedes veränderte Artefakt;
wobei das Erstellen des Minimumtestumfangs das Bestimmen beinhaltet, welche Prozesse oder Prozessschritte getestet werden müssen, um sicherzustellen, dass der globale Kritikalitätsgrad erreicht wird;
Bereitstellen zur Überprüfung (237) von Parametern, die den Minimumtestumfang betreffen, wobei die Parameter den Testaufwand oder die Testzeit umfassen, die mit dem erstellen Minimumtestumfang assoziiert bzw. verknüpft ist;
Bereitstellen (237) eine Satzes von Neuplanung-Tools, konfiguriert zum Empfangen von Eingabemodifizierungsparametern, wobei die Eingabemodifizierungsparameter das Niveau sichergestellter Richtigkeit für die relevanten Prozesse umfassen, und Neuerstellen des Minimumtestumfangs; und
Übertragen des erstellen Minimumtestumfangs an ein Testmanagement-Tool.

## Revendications

1. Procédé mis en oeuvre par ordinateur d'augmentation de l'efficacité de test de logiciel au cours d'un test de régression, comprenant :
compiler (210), avec un processeur électronique, une liste de processus pertinents,
dans lequel la liste de processus pertinents est définie par quels processus (101A à 101E) appellent un artéfact (102A à 102G) qui a été changé ;
attribuer (213), avec le processeur électronique, un attribut de criticité à chaque processus pertinent ;
classifier (217), avec le processeur électronique, un effort de test requis pour chaque processus pertinent ;
déterminer (220) des dépendances entre les processus pertinents ;
spécifier (227) un niveau de criticité global, le niveau de criticité global spécifiant des niveaux d'exactitude garantie pour chaque processus pertinent en fonction de l'attribut de criticité attribué, dans lequel plus le niveau d'exactitude garantie est élevé, plus le processus pertinent correspondant a besoin d'être testé ;
déterminer (230), par une spécification d'utilisateur, un taux d'appel minimal pour chaque artéfact changé,
dans lequel le taux d'appel minimal est un nombre de fois minimal que chaque artéfact changé est appelé par les processus qui l'utilisent au cours d'un processus de test ;
compiler (233), avec le processeur électronique, une portée de test minimale qui satisfait le niveau de criticité global,
dans lequel ladite portée de test minimale se base :
- au moins en partie sur les dépendances ; et
- au moins en partie sur le taux d'appel minimal pour chaque artéfact changé ;
dans lequel compiler la portée de test minimale inclut déterminer quels processus ou quelles étapes de processus ont besoin d'être testé(e)s afin de garantir que le niveau de criticité global est atteint ;
fournir pour une révision (237), par le biais d'une interface utilisateur exécutée sur le processeur électronique, des paramètres liés à la portée de test minimale,
les paramètres comprenant l'effort de test ou la durée de test associée à la portée de test minimale compilée ;
fournir (237), par le biais de l'interface utilisateur exécutée sur le processeur électronique, un ensemble d'outils de replanification configurés pour recevoir des paramètres de modification d'entrée, les paramètres de modification d'entrée comprenant le niveau d'exactitude garantie pour les processus pertinents, et
recompiler la portée de test minimale ; et
transférer la portée de test minimale compilée à un outil de gestion de test.

2. Produit de programme informatique comprenant des instructions lisibles par ordinateur qui, lors de son chargement et exécution dans un système informatique et/ou système de réseau informatique, amène le système informatique et/ou le système de réseau informatique à réaliser des opérations conformément au procédé selon la revendication 1.

3. Système informatique d'augmentation de l'efficacité de test de logiciel au cours d'un test de régression, comprenant :
un processeur électronique configuré pour exécuter un progiciel qui inclut une pluralité de processus (101A à 101E) et une pluralité d'artéfacts (102A à 102G),
et réactif à une mise à jour logicielle, le processeur électronique étant configuré pour :
compiler (210) une liste de processus pertinents,
dans lequel la liste de processus pertinents est définie par quels processus (101A à 101E) appellent un artéfact (102A à 102G) qui a été changé ;
attribuer (213) un attribut de criticité à chaque processus pertinent ;
classifier (217) un effort de test requis pour chaque processus pertinent ;
déterminer (220) des dépendances entre les processus pertinents ;
spécifier (227) un niveau de criticité global, le niveau de criticité global spécifiant des niveaux d'exactitude garantie pour un processus pertinent en fonction de l'attribut de criticité attribué, dans lequel plus le niveau d'exactitude garantie est élevé, plus le processus pertinent correspondant a besoin d'être testé ;
déterminer (230), par une spécification d'utilisateur, un taux d'appel minimal pour chaque artéfact changé,
dans lequel le taux d'appel minimal est un nombre de fois minimal que chaque artéfact changé est appelé par les processus qui l'utilisent au cours d'un processus de test ;
compiler (233) une portée de test minimale qui satisfait le niveau de criticité global,
dans lequel ladite portée de test minimale se base :
- au moins en partie sur les dépendances ; et
- au moins en partie sur le taux d'appel minimal pour chaque artéfact changé ;
dans lequel compiler la portée de test minimale inclut déterminer quels processus ou quelles étapes de processus ont besoin d'être testé(e)s afin de garantir que le niveau de criticité global est atteint ;
fournir (237) pour une révision des paramètres liés à la portée de test minimale, les paramètres comprenant l'effort de test ou la durée de test associée à la portée de test minimale compilée ;
fournir (237) un ensemble d'outils de replanification configurés pour recevoir des paramètres de modification d'entrée, les paramètres de modification d'entrée comprenant le niveau d'exactitude garantie pour les processus pertinents, et recompiler la portée de test minimale ; et
transférer la portée de test minimale compilée à un outil de gestion de test.
